# EUROPEAN PATENT SPECIFICATION

(11) **EP 2 219 837 B1**
(45) Date of publication and mention of the grant of the patent: **14.08.2013**
(21) Application number: 07819782.9
(22) Date of filing: 13.11.2007
(51) Int. Cl.: B29B 7/74, B29B 7/18, B29B 7/48, B29B 7/90

(54) **Process for manufacturing a tire**
Verfahren zur Herstellung eines Reifens
Procédé de fabrication d'un pneumatique

(43) Date of publication of application: 25.08.2010
(73) Proprietor: Pirelli Tyre S.P.A., 20126 Milan (IT)
(72) Inventor: BOTTOMLEY, Alan, I-20126 Milano (IT); TESTI, Stefano, I-20126 Milano (IT); KUHLMANN, Udo, I-20126 Milano (IT); MANCINI, Gianni, I-20126 Milano (IT)
(74) Representative: Tirloni, Bartolomeo
(86) International application number: PCT/EP2007/009798
(87) International publication number: WO 2009/062525

(56) References cited:
- EP-A- 0 814 113
- EP-A- 0 972 790
- EP-A1- 1 757 420
- US-A- 4 910 237
- US-A- 5 198 171
- US-A1- 2002 042 479

## Description

### Field of the invention

The present invention relates to a process for manufacturing a tire.

More particularly, the present invention includes a process for producing an elastomeric compound comprising at least one mixing step carried out in at least one batch mixing device, and at least one mixing step carried out in at least one continuous mixing device, the resulting elastomeric compound being used in the manufacturing of tires.

### Background of the invention

Conventionally, the production of elastomeric compounds is performed batchwise by means of batch mixing devices, e.g. internal mixers such as, for example, Banbury^{®} mixers, having two counter-rotating rotors which exert an intensive mixing action to masticate the elastomeric polymer(s) and to incorporate and thoroughly disperse therein the other components usually present in the elastomeric compounds such as, for example, reinforcing fillers, lubricating aids, curatives and other additives.

The production of elastomeric compounds using internal mixers shows many drawbacks, particularly a poor heat dissipation and thus a scarce temperature control, mainly due to an unfavourable ratio between material volume and mixer surface area. To improve dispersion in the elastomeric polymer(s), the various components, and particularly the reinforcing fillers, are usually incorporated into the elastomeric polymer(s) in batches distributed in a plurality of mixing operations separated by cooling and storage steps. Usually, the temperature sensitive components, such as crosslinking agents and accelerators, are added only during the final mixing step, after the cooling of the elastomeric compounds below a predetermined temperature (usually below 110°C) to avoid premature crosslinking ("scorching" phenomena).

Therefore, the production of elastomeric compounds using batch mixing devices, although still remaining the most widely used production process in the rubber industry, is time and energy consuming and does not guarantee an effective control on the properties of the resulting elastomeric compounds, particularly as regards dispersion homogeneity of reinforcing fillers into the elastomeric polymer(s). Variation in the added amounts of individual components, timing of addition and discharge from the mixers, initial temperature of the raw materials, and fluctuations of shear forces inside the material during mixing, all contribute to batch-to-batch variation.

To overcome the limitations of the batchwise processes above disclosed, many attempts have been performed by the rubber industry to set up production processes, based on extrusion techniques analogous to those commonly employed in the processing of thermoplastic polymer materials. Production processes carried out by means of an extruder should improve uniformity of the properties of the obtained elastomeric compounds, better thermal management resulting from improved surface-to-mass ratios, and possible development of highly automated operations. For an overview on this subject see the article "A tale of continuous development" by H. Ellwood, published in European Rubber Journal, March 1987, pages 26-28.

United States Patent US 4,897,236 discloses a process and an apparatus for continuously producing a rubber mixture, wherein the ingredients of the mixture are fed, masticated and homogenized in a twin-screw extruder. The resulting mixture is divided into a first and a second portion. The first portion is discharged, while the second portion is recycled for further homogenization and for mixing with fresh batches of the ingredients being fed to the extruder. The recycled portion is circulated to and returned from a cooled, annular chamber exterior to the extruder chamber, said annular chamber having outflow and inflow passages communicating with the interior of the extruder. That partial recycling of the rubber mixture should compensate for fluctuations in the metering of the ingredients and for local inhomogeneities which may occur. Moreover, the intensive cooling of the recycled portion in the annular chamber should correct a rising processing temperature, and should improve the dispersing action because of increased shearing stresses consequent to the temperature decrease.

United States Patent US 5,626,420 discloses a continuous mixing process and apparatus, wherein base elastomer(s) and other components are continuously dosed and introduced into a mixing chamber formed of a stator and a rotor rotating therein, preferably a single screw extruder. The introduced components advance within the mixing chamber along zones of propulsion and mixing. To improve dispersion and homogenization of the rubber components, the filling rate of the mixing chamber in at least certain mixing zones is lower than 1. To properly introduce the components, and particularly the rubber base, into the mixing chamber, force feeding means are used, such as volumetric pumps (e.g. gear pumps). To obtain precise dosage of the different components, it may be desirable to add the components in a mixing zone where the filling rate is equal to 1, located between two mixing zones having a filling rate lower than 1.

United States Patent US 6,726,352 discloses a method for processing a rubber mixture or compound for tire manufacturing including the steps of determining variation tolerances with respect to reference values for process parameters, detecting values of the process parameters, comparing detected values of the process parameters with the reference values and the variation tolerances, attributing an evaluation to a semi-finished product depending on compliance or non-compliance of the detected values with the reference values and the variation tolerances, classifying the semi-finished product on a basis of the attributed evaluation, and establishing successive steps for processing the semi-finished product depending on the classification of the semi-finished product. The processing includes at least one mixing cycle and an extrusion cycle for obtaining the semi-finished product. Said mixing cycle is advantageously carried out in at least one mixer comprising a pair of rotors which operate tangentially relative to each other or are interpenetrating such as, for example a Banbury^{®} or a Intermix^{®}. The cycles are controlled by the process parameters detected during execution of the cycles.

United States Patent US 5,198,171 discloses a process for continuously producing a heat-vulcanizable silicone rubber compound, which includes the steps of: (i) mixing (A) a diorganopolysiloxane having a viscosity as measured at 25 °C. of 1x105 cP or more, (B) an inorganic filler and (C) a processing aid, as basic ingredients, by a high-speed mechanical shearing machine, thereby to obtain a flowable particulate mixture in which each ingredient is present in a substantially uniformly and finely dispersed state, and (ii) continuously feeding, at a constant feed rate, said particulate mixture to a continuously kneading and extruding machine through a feed opening thereof, which machine has two screws rotating in the same direction, thereby to obtain a homogeneous silicone rubber compound from a discharge opening of said kneading and extruding machine.

Document US-A-4 910 237 discloses a process for manufacturing a tire comprising the following features of claim 1:
- manufacturing a green tire comprising a plurality of structural elements,
- subjecting the green tire to moulding and crosslinking to obtain a finished tire;
wherein at least one of said structural element comprises an elastomeric compound, produced by
- feeding all the components of said elastomeric compound to at least one batch mixing device of a mixing apparatus, wherein said components comprise at least one elastomeric polymer, at least one reinforcing filler and vulcanizing agents wherein said at least one batch mixing device has two counter-rotating rotors;
- mixing and dispersing, in said mixing apparatus, said at least one reinforcing filler into said at least one elastomeric polymer so as to obtain said elastomeric compound, wherein the mixing is carried out in at least two different steps, the first step being a non-productive step wherein all the components except those able to promote the crosslinking are fed to said batch mixing device, the second step being a productive step;
- discharging said elastomeric compound from said mixing apparatus;
- feeding said elastomeric compound to at least one continuous mixing device, said continuous mixing device comprising at least two rotating screws;
- mixing said elastomeric compound into said at least one continuous mixing device;
- discharging said elastomeric compound from said at least one continuous mixing device.

### Summary of the invention

In the Applicant's view, one of the most critical aspects in the production of elastomeric compounds by means of continuous mixing devices, e.g. extruders, is the feeding system of all the components of the elastomeric compounds into the continuous mixing devices. In fact, said components must be worked (e.g. granulated, pelletized, subdivided, ect.) and precisely dosed to be fed into the continuous mixing devices. For these reasons, a complex feeding system should be provided, which causes an increase in the overall production process in time, as well as an increase of the production costs.

On the other hand, the Applicant has noted that the dispersion of the components which are usually added to the elastomeric compounds, in particular the dispersion of the reinforcing fillers using batch mixing devices, may be unsatisfactory.

However, increasing the number of mixing steps in batch mixing devices in order to improve the components dispersion in the elastomeric compounds, generally, may cause a lot of drawbacks such as, for example, damages to the elastomeric polymer(s), worsening of the mechanical properties of the elastomeric compounds, premature crosslinking ("scorching" phenomena) of the elastomeric compounds.

The Applicant has faced the problem of providing a more efficient process for producing elastomeric compounds which reduces the number of mixing steps to which the elastomeric compounds are usually subjected when the process is carried out using batch mixing devices, as well as to reduce or even to avoid the drawbacks which may occur when the process is carried out by using continuous mixing devices.

In particular, the Applicant has faced the problem of providing a process for producing an elastomeric compound wherein an improved dispersion of said components, in particular of the reinforcing fillers, may be obtained, without negatively affecting the mechanical properties (both static and dynamic) of the obtained elastomeric compound.

The Applicant has now surprisingly found that the above reported properties may be obtained by producing an elastomeric compound with at least one mixing step carried out in at least one batch mixing device and at least one mixing step carried out in at least one continuous mixing device.

Moreover, the Applicant has found that said process allows to reduce the mixing time so increasing the productivity and reducing the production costs.

For the aim of the present description and of the claims which follow, the term "batch mixing device" means a mixing device into which the components of the elastomeric compound are periodically fed in predefined amounts (batches) and mixed for a predetermined time so as to obtain the elastomeric compound. At the end of the mixing step, the obtained elastomeric compound is completely discharged from the mixing device.

For the aim of the present description and of the claims which follow, the term "continuous mixing device" means a mixing device into which the components of the elastomeric compound are continuously fed (apart from possible stopping of the mixing device due to maintenance, or change of elastomeric compound recipe) and from which the elastomeric compound is discharged in a continuous stream, in contrast to the periodic charge/discharge of a batch mixing device.

According to a first aspect the present invention relates to a process according to claim 1.

The Applicant has found that said second elastomeric compound shows a significantly improved dispersion of said at least one reinforcing filler with respect to said first elastomeric compound, together with substantially unaffected or even improved mechanical properties (both static and dynamic).

According to one preferred embodiment, said process may be carried out continuously or discontinuously.

When said process is carried out continuously, the first elastomeric compound is directly fed to said at least one continuous mixing device without being stored.

When said process is carried out discontinuously, said first elastomeric compound is fed to said at least one continuous mixing device after having being stored.

According to one preferred embodiment, said batch mixing device is selected from internal mixers, open mixers. Internal mixers are particularly preferred.

Usually, said batch mixing device comprises a pair of rotors which operate tangentially relative to each other or are inter-penetrating.

Usually, said batch mixing device comprises a mixing chamber internally housing a pair of rotors turning in opposite directions, so as to mix up the components introduced into the mixing chamber from the top thereof.

For this purpose, said batch mixing device is usually provided with a pneumatic or hydraulic cylinder located in the upper part of the mixing chamber and a piston movable upwards to open the mixing chamber, thereby allowing the introduction of the components via special loading hoppers, and downwards so as to exert a pressure on the material processed by the rotors and located above them.

A hydraulic system located on the bottom of the mixing chamber allows discharging of the elastomeric compound at the end of the mixing cycle by opening a suitable outlet.

Specific examples of internal mixers which may be advantageously used according to the present invention are those known under the tradename of Banbury^{®} or Intermix^{®}, depending on whether the rotors operate tangentially relative to each other or are inter-penetrating. Banbury^{®} mixer is particularly preferred.

Specific examples of open mixers which may be advantageously used according to the present invention are: open mill mixer, Z-blade mixer. Open mill mixer is particularly preferred.

The mixing in said at least one batch mixing is carried out at a rotor speed of about 20 rpm to about 60 rpm, preferably of about 30 rpm to about 50 rpm.

According to a further preferred embodiment, the mixing in said at least one batch mixing device, may be carried using a fill factor of the mixing chamber (the fill factor is the portion of the total free volume of the mixing chamber occupied by the material to be mixed) not higher than about 80%, preferably of about 55% to about 70%. If a too high fill factor is selected, lack of free volume prevents material movement and cross-blending and adequate mixing becomes impossible. Likewise, if only a very small fill factor is selected, it is difficult to ensure adequate mixing, with high shearing forces, and adequate homogenisation of the material in the mixing chamber.

Said at least one continuous mixing device has at least two co-rotating screws.

Said rotating screws may comprise high-shear mixing elements such as kneaders; elements that enable redistribution of the materials such as toothed elements, gears or pins; flow restrictors such as blisters, adjustable or fixed throttling arrangements, or screw flights with low flight depth. These elements are arranged on two or more shafts that rotate about their axes in the same-sense (co-rotating). The screw shaft may be parallel, convergent, or divergent. The rotating speeds of said shafts may be the same or different. The screw shafts are placed apart at different distances from each other so as to enable the assembly of elements on each shaft to intermesh to various extents. The choice of orientation of each of the mixing elements (including whether the elements will be left handed or right handed) is made based on the degree of back mixing and/or pressure gradient and temperature/shear history required along the extruder length. Some variations in the design of kneaders include single cam, double or multi lobe designs. The number of teeth on the gear or toothed mixer may also vary.

Said at least two co-rotating screws are intermeshed.

According to a further preferred embodiment, said continuous mixing device is a mixing extruder.

Preferably, said mixing extruder comprises:
- a housing, said housing including at least one feed opening and a discharge opening;
- at least two screws rotatably mounted in said housing.

Said mixing extruder is selected from: co-rotating twin-screw extruders; co-rotating multi-screw extruders comprising more than two screws such as, for example, ring extruders; planetary roller extruders. Co-rotating twin-screw extruders, or ring extruders, are particularly preferred. Ring extruders are even more preferred.

Said at least one mixing extruder is a self-wipening co-rotating intermeshing twin-screw or multi-screw extruder.

Usually, the self-wipening co-rotating intermeshing multi-screw or twin-screw extruders comprise mixing elements of one rotating screw which are substantially fully intermeshed with the mixing elements of the adjacent rotating screw thus allowing the self-wipening of the extruder.

The use of said co-rotating substantially fully intermeshing multi-screw or twin-screw extruder may allow to obtain a very good dispersion of the components, in particular of the reinforcing fillers, in the second elastomeric compounds.

The mixing in said at least one continuous mixing device is carried out at a screw speed of about 40 rpm to about 400 rpm.

It has to be noted that said screw speed may allow to obtain a very good dispersion of the components, in particular of the reinforcing fillers, in the second elastomeric compound, as well as to avoid premature crosslinking ("scorching" phenomena) of the second elastomeric compound which may occur if a too high screw speed is used.

The process of the present invention comprises cooling said first elastomeric compound before feeding it to said at least one continuous mixing device. Said first elastomeric compound is cooled to a temperature from about 15°C to about 40°C, preferably from about 20°C to about 25°C.

According to a further embodiment, said mixing apparatus includes at least one conveying extruder.

According to one preferred embodiment, said first elastomeric compound is fed to said at least one conveying extruder before being fed to said at least one continuous mixing device.

According to one preferred embodiment, said at least one conveying extruder comprises:
- a housing, said housing including at least one feed opening and a discharge opening;
- at least one conveying element rotatably mounted in said housing.

For the purposes of the present invention and of the claims which follow, the term "conveying element" means an element which does not substantially exert a mixing action but merely exerts a conveying of the elastomeric compound through the extruder length. Typical conveying elements may be selected, for example, from elements that mainly promote axial movement of the material such as helical screws.

According to a further preferred embodiment, the conveying in said at least one conveying extruder may be carried out at a conveying element speed from about 10 rpm to about 60 rpm, preferably from about 20 rpm to about 35 rpm.

The feeding to said at least one conveying extruder may allow to control the feeding rate of said first elastomeric compound to said at least one continuous mixing device.

Preferably, said at least one conveying extruder is selected from single helical screw extruders, dump extruders having counter-rotating two helical screws.

According to a further embodiment, said mixing apparatus includes at least one open mixer.

According to a further embodiment, said mixing apparatus includes at least one internal mixer and at least one open mixer, said open mixer being preferably placed downstream to said at least one internal mixer.

According to a further embodiment, the process of the present invention, may comprise feeding said second elastomeric compound to at least one further batch mixing device. Said at least one further batch mixing device may be selected from those above disclosed.

According to a further embodiment, the process of the present invention, may comprise feeding said second elastomeric compound to at least one further continuous mixing device. Said at least one further continuous mixing device may be selected from those above disclosed.

According to a further embodiment, said at least one continuous mixing device may be placed upstream of a device for manufacturing a semi-finished product by using said second elastomeric compound.

The device for manufacturing a semi-finished product may be selected from those known in the art such as, for example, calendering devices, extruders.

According to a further embodiment, said at least one continuous mixing device may be equipped with a roller die. In this case, a semi-finished product is directly obtained from said at least one continuous mixing device.

Accordingly to a further embodiment, said at least one continuous mixing device may be equipped with an extrusion die. In this case, a semi-finished product is directly obtained from said at least one continuous mixing device.

Said semi-finished product may be, for example, one of the different structural elements of a tire such as, for example: carcass ply, belt layer, bead filler, sidewall, tread band, liner, underliner, antiabrasive layer. According to processes known in the art, said structural elements may be subsequently assembled using a suitable manufacturing apparatus to give a finished tire.

On the other hand, alternative processes for manufacturing a tire without using semi-finished products, are known in the art.

In this regards, in case of tire structural elements being substantially constituted by elastomeric compound such as, for example, bead filler, sidewall, tread band, liner, underliner, antiabrasive layer, a continuous elongated strip-like element is laid down on a support bearing the tire being manufactured, said continuous elongated strip-like element being arranged so as to form a plurality of consecutive coils in side by side and/or superposed relationship, to obtain a tire in its final configuration. Alternatively, in case of tire structural elements being substantially constituted by elastomeric compound and at least one thread-like reinforcing element such as, for example, carcass ply, belt layer, said continuous elongated strip-like element is associated with at least one thread-like reinforcing element in order to produce semi-finished products in the form of rubberized wire or of strip-like element comprising at least one thread-like reinforcing element, which are further laid down on a support bearing the tire being manufactured, in side-by side and/or superposed relationship, to obtain a tire in its final configuration. Said support may be a rigid support and may have a toroidal shape. Processes of this type may be disclosed, for example, in European Patent Applications EP 928 680 or EP 928 702, or in International Patent Application WO 01/36185.

Said support may be selected, for example, from the following devices:
- building drum having a substantially cylindrical configuration supporting at least one carcass ply;
- shaping drum having a substantially toroidal configuration, said shaping drum preferably supporting at least one carcass ply with at least one belt layer assembled thereon;
- auxiliary drum having a substantially cylindrical configuration, said auxiliary drum preferably supporting at least one belt layer;
- rigid support preferably shaped so as to substantially match the inner surface of the finished tire to be formed.

According to a further embodiment, said at least one continuous mixing device may form said second elastomeric compound as a continuous elongated strip-like element which is further deposited on a support as above reported, said continuous mixing device being preferably equipped with a roller die or an extrusion die. Alternatively, said continuous elongated strip-like element may be associated with at least one reinforcing thread-like reinforcing element.

Said continuous elongated strip-like element, comprising said second elastomeric compound, may have a flattened cross-section such as, for example, rectangular, elliptic, or lenticular, or tapered shape. Cross-section dimensions of said continuous elongated strip-like element are considerably lower than the cross-section dimensions of the structural element to be manufactured. By way of example, the continuous elongated strip-like element may have a width indicatively ranging from about 3 mm to about 15 mm and a thickness indicatively ranging from about 0.5 mm to about 1.2 mm.

All the components of the elastomeric compound are fed to said at least one mixing apparatus.

In particular, besides said at least one elastomeric polymer and said at least one reinforcing filler, at least one of the following components may be added to the elastomeric compound:
- vulcanizing agents such as, for example, sulfur, or molecules containing sulfur (sulfur donors), or mixtures thereof;
- activators such as, for example, zinc compounds, and in particular ZnO, ZnCO₃, zinc salts of saturated or unsaturated fatty acids containing from 8 to 18 carbon atoms, such as, for example, zinc stearate, which are preferably formed *in situ* in the elastomeric compound from ZnO and fatty acid, and also BiO, PbO, Pb₃O₄, PbO₂, or mixtures thereof;
- accelerators such as, for example, dithiocarbamates, guanidine, thiourea, thiazoles, sulphenamides, thiurams, amines, xanthates, or mixtures thereof;
- additives selected on the basis of the specific application for which the composition is intended such as, for example, antioxidants, anti-ageing agents, plasticizers (e.g. plasticizing oils), adhesives, anti-ozone agents, modifying resins, or mixtures thereof.

The above list of components is given only to illustrate some examples of the most common components usually used in elastomeric compounds, particularly in elastomeric compound for tires manufacturing, and shall not be intended as limiting of the scope of the present invention.

When all the components of the elastomeric compound are fed to a batch mixing device, e.g. an internal mixer such as a Banbury® mixer, the mixing is carried out in at least two different steps, the first step being a non-productive step wherein all the components except those able to promote the crosslinking (for example, sulfur and accelerators) are fed to said batch mixing device, the second step being a productive step wherein the elastomeric compound obtained from said first step as well as the components able to promote crosslinking are fed to said batch mixing device. The so obtained elastomeric compound, i.e. first elastomeric compound, is subsequently fed to a continuous mixing device, e.g. an extruder, so as to obtain a second elastomeric compound.

The process according to the present invention may be employed to produce an elastomeric compound comprising any kind of elastomeric polymers, particularly of elastomeric polymers, as well as any kind of reinforcing fillers, usually used in the tires manufacturing.

The elastomeric polymers are selected, for example, from: diene elastomeric polymers and mono-olefin elastomeric polymers, or mixtures thereof.

Diene elastomeric may be selected, for example, from elastomeric polymers or copolymers with an unsaturated chain having a glass transition temperature (T_{g}) generally below 20°C, preferably in the range from about 0°C to about -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight. Examples of diene elastomeric polymers are: cis-1,4-polyisoprene (either natural or synthetic, preferably natural rubber), 3,4-polyisoprene, poly-1,3-butadiene (in particular, high vinyl poly-1,3-butadiene having a content of 1,2-polymerized untis from about 15% to about 85% by weight), polychloroprene, optionally halogenated isoprene/isobutene copolymers, 1,3-butadiene/acrylonitrile copolymers, 1,3-butadiene/styrene copolymers, 1,3-butadiene/isoprene copolymers, isoprene/styrene copolymers, isoprene/1,3-butadiene/ styrene terpolymers; or mixtures thereof.

As to mono-olefin elastomeric polymers, they may be selected, for example, from: copolymers of ethylene with at least one alpha-olefin having from 3 to 12 carbon atoms, and optionally with a diene having from 4 to 12 carbon atoms; polyisobutene; copolymers of isobutene with at least one diene. Particularly preferred are: ethylene/propylene copolymers (EPR); ethylene/propylene/diene terpolymers (EPDM); polyisobutene; butyl rubbers; halobutyl rubbers; or mixtures thereof.

Preferably, said at least one reinforcing filler may be selected, for example, from: carbon black, silica, alumina, aluminosilicates, calcium carbonate, kaolin, or mixtures thereof.

When a reinforcing filler comprising silica is present, the elastomeric compound may advantageously incorporate a coupling agent capable of interacting with the silica and of linking it to the elastomeric polymer(s) during the vulcanization. Among the coupling agents that are particularly preferred are bis(3-triethoxysilylpropyl)-tetrasulphide, or bis(3-triethoxysilylpropyl)disulphide. Said coupling agents may be used as such or as a suitable mixture with an inert filler (for example, carbon black) so as to facilitate their incorporation into the elastomeric compound.

### Brief description of the drawings

The present invention will now be illustrated in further detail by means of illustrative embodiments, with reference to the attached figures wherein:
Fig. 1 is a schematic diagram of a plant for producing an elastomeric compound;
Fig. 2-8 are schematic diagrams of plants for producing an elastomeric compound;
Fig. 9a is a lateral view of the two screws of a self-wipening co-rotating intermeshing twin-screw extruder;
Fig. 9b are views in cross-section of the two screws of a self-wipening co-rotating intermeshing twin-screw extruder.

### Detailed description of the preferred embodiments

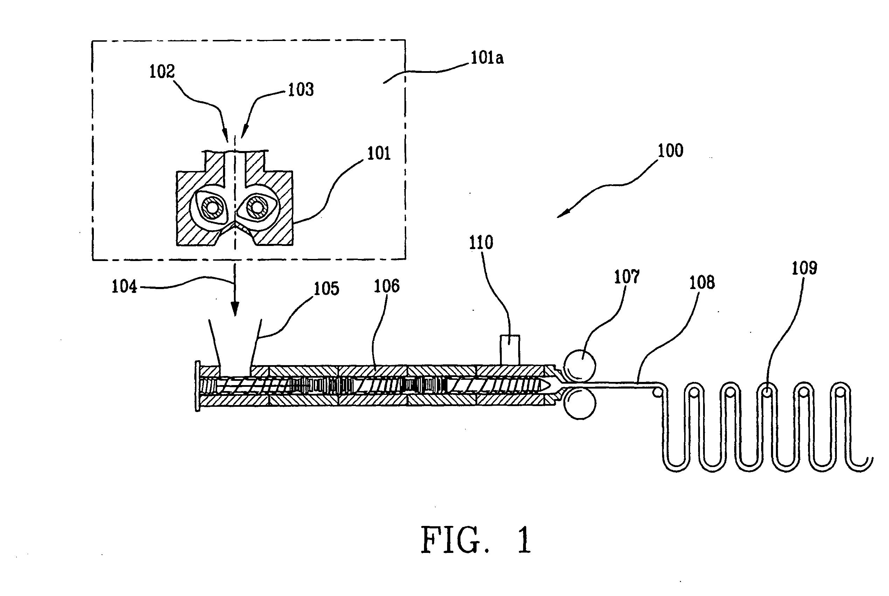

With reference to Fig. 1, the plant (100) for producing an elastomeric compound includes a mixing apparatus (101a) comprising an internal mixer (101) (e.g. a Banbury^{®} mixer) wherein the elastomeric polymer(s) (102) and the reinforcing filler(s) (103) are fed.

Preferably, all the remaining components of the elastomeric compound (e.g. vulcanizing agents, activators, accelerators, or the other additives optionally present) may be fed to the internal mixer (101).

Alternatively, in accordance with the invention, the mixing into said internal mixer (101) is carried out in at least two steps.

After the mixing has been carried out, the obtained first elastomeric compound (104) is fed to the mixing extruder (106) (e.g. a self-wipening co-rotating intermeshing twin-screw extruder) through a feed hopper (105).

The mixing extruder (106) of Fig. 1, shows only one feed hopper (105). However, particularly in the case when all the components of the elastomeric compound (e.g. vulcanizing agents, activators, accelerators, or the other additives optionally present) are not fed to the internal mixer (101), more than one feed hopper (not represented in Fig. 1), may be present along the mixing extruder (106). Moreover, the mixing extruder (106) may be provided with gravimetically controlled feeding pumps (not represented in Fig. 1) which are useful to introduce into the mixing extruder (106) liquid components such as, for example, plasticizing oils.

Usually, the mixing extruder (106) may optionally be provided with a degassing unit (110) to allow the exit of the gases which may develop during the mixing of the elastomeric compound. Alternatively, more than one degassing unit may be present along the mixing extruder (106) (not represented in Fig. 1).

After the mixing have been carried out, a second elastomeric compound (108) is discharged from the mixing extruder (106), e.g. in the form of a continuous ribbon, by pumping it through a roller die (107), for example by means of a gear pump (not represented in Fig. 1), and is subsequently cooled, preferably to room temperature, by passing it through a cooling device (109).

Alternatively, the second elastomeric compound (108) may be obtained in the form of a subdivided product by pumping it through an extruder die (not represented in Fig. 1), said extruder die being provided with a perforated die plate equipped with knives, by means of a gear pump (not represented in Fig. 1). The obtained product in subdivided form is subsequently cooled, preferably to room temperature, e.g. by conveying it to a cooling device (not represented in Fig. 1).

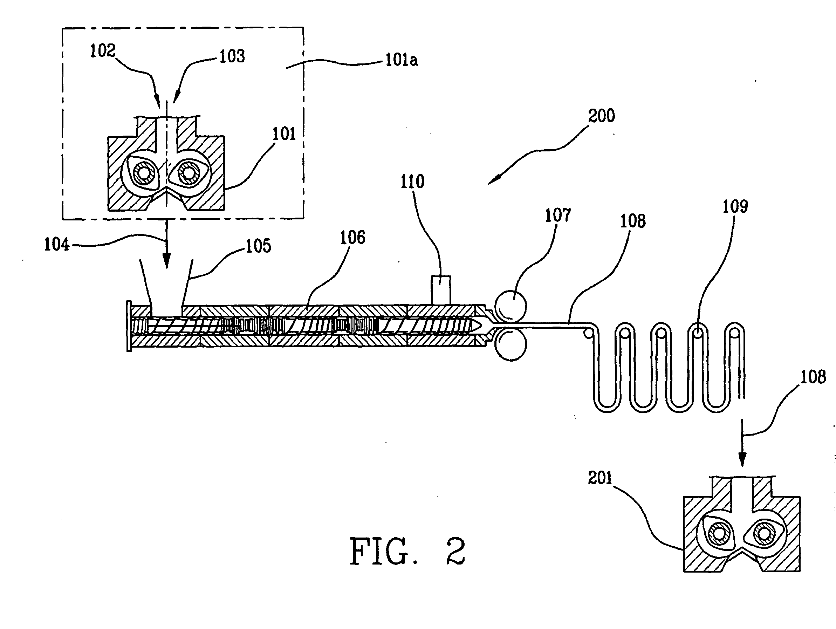

Fig. 2 shows a further embodiment of the plant (200) for producing an elastomeric compound: the same reference numbers have the same meanings as disclosed in Fig. 1. It has to be intended that all the alternatives disclosed above with reference to Fig. 1 are valid also with reference to Fig. 2.

According to said plant, the second elastomeric compound (108) is fed to a further internal mixer (201) (e.g. a Banbury^{®} mixer). The feeding to said further internal mixer (201) may be particularly useful when not all the components of the elastomeric compound are fed to the internal mixer (101). In this case, for example, the vulcanizing agents, and/or the activators, and/or the accelerators may be fed to said further internal mixer (201).

According to the particular embodiment of Fig. 2, the second elastomeric compound (108) is cooled, preferably to room temperature, by passing it through a cooling device (109) before being fed to said further internal mixer (201).

Alternatively, the second elastomeric compound (108) may be directly fed, without being cooled, to said further internal mixer (201) (not represented in Fig. 2).

Alternatively, the second elastomeric compound (108) may be obtained in the form of a subdivided product as disclosed above and subsequently fed to said further internal mixer (201) (not represented in Fig. 2).

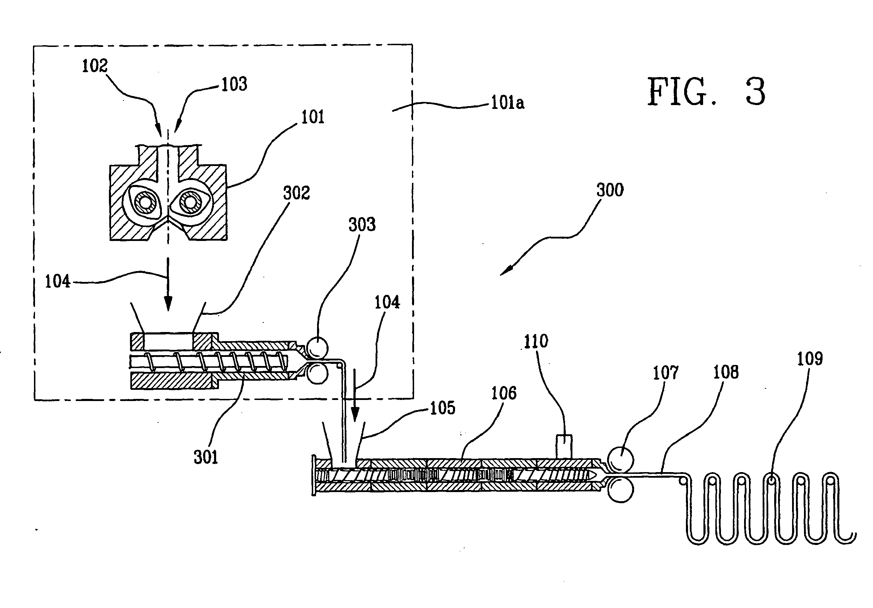

Fig. 3 shows a further embodiment of the plant (300) for producing an elastomeric compound: the same reference numbers have the same meanings as disclosed in Fig. 1. It has to be intended that all the alternatives disclosed above with reference to Fig. 1 are valid also with reference to Fig. 3.

In the particular embodiment of Fig. 3, a mixing apparatus (101a) comprising an internal mixer (101) and a conveying extruder (301) is represented.

According to said embodiment, the first elastomeric compound (104) is fed to a conveying extruder (301) (e.g. a single helical screw extruder) through a feed hopper (302).

The feeding to said one conveying extruder (301) may allow to control the feeding rate of said first elastomeric compound (104) to said mixing extruder (106). According to the particular embodiment of Fig. 3, the first elastomeric compound (104) is directly fed to the conveying extruder (301).

According to the particular embodiment of Fig. 3, the first elastomeric compound (104) is directly fed from said conveying extruder (301) to the mixing extruder (106), through a feed hopper (105) e.g. in the form of a continuous ribbon, by pumping it through a roller die (303), for example by means of a gear pump (not represented in Fig. 3).

Alternatively, said conveying extruder (301), instead of said roller die (303), may be equipped with:
- an extruder die provided with a perforated die plate equipped with knives in order to obtain said first elastomeric compound in the form of a subdivided product before feeding it to said mixing extruder (106) (not represented in Fig. 3); or
- an open head in order to allow said first elastomeric compound to directly flow into said mixing extruder (106) (not represented in Fig. 3).

Alternatively, said conveying extruder (301) may be replaced with an open mill mixer (not represented in Fig. 3).

Alternatively, an open mill mixer may be placed between said internal mixer (101) and said conveying extruder (301) (not represented in Fig. 3).

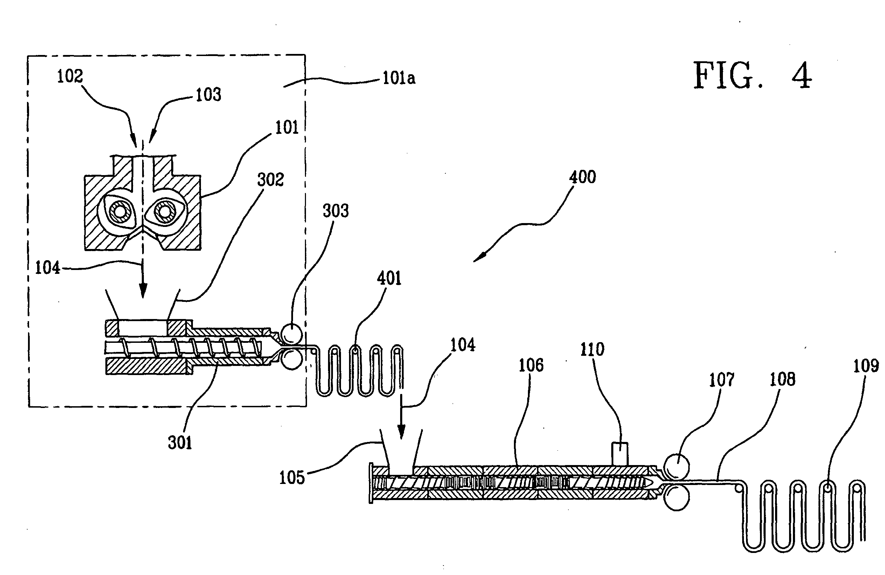

Fig. 4 shows a further embodiment of the plant (400) for producing an elastomeric compound: the same reference numbers have the same meanings as disclosed in Fig. 1 and in Fig. 3. It has to be intended that all the alternatives disclosed above with reference to Fig. 1, as well as to Fig. 3, are valid also with reference to Fig. 4.

According to the particular embodiment of Fig. 4, the first elastomeric compound (104), at the exit from the conveying extruder (301), is firstly cooled, preferably to room temperature, by passing it through a cooling device (401), before feeding it to the mixing extruder (106). Said cooling may be useful in order to increase the viscosity of said first elastomeric compound before feeding it to said mixing extruder (106) so allowing a better mixing of said first elastomeric composition into said mixing extruder (106).

Alternatively, the first elastomeric compound (104), at the exit from the conveying extruder (301), after being cooled by passing it through a cooling device (401), may be obtained in the form of a subdivided product by means of a cutting device (e.g. a mill provided with rotatably blades) before being fed to the mixing extruder (106) (not represented in Fig. 4). Preferably, in this case, the feeding to the mixing extruder (106) may be controlled by means of feeders (e.g. volumetric or loss-in-weight feeders) (not represented in Fig. 4).

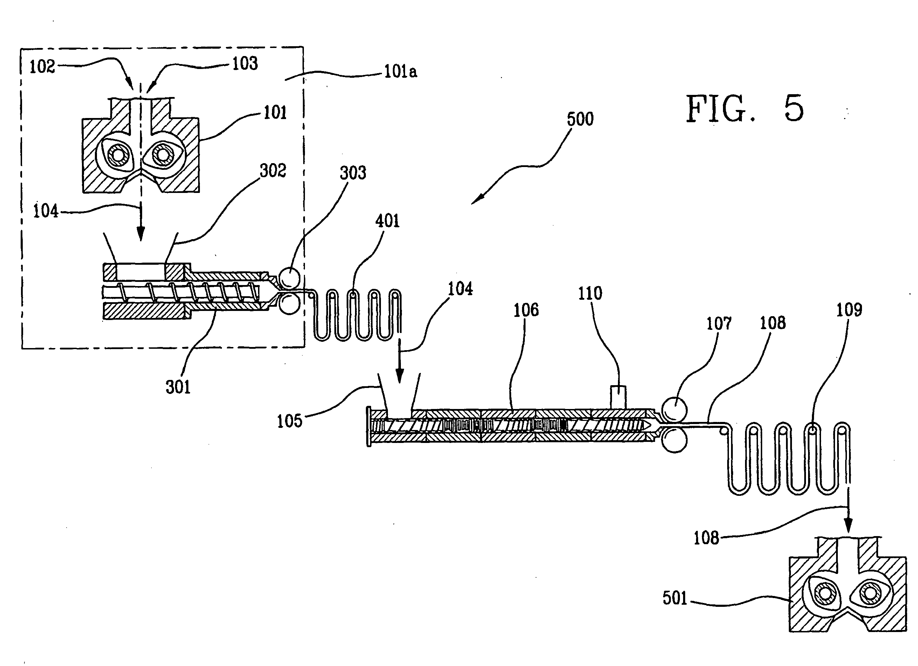

Fig. 5 shows a further embodiment of the plant (500) for producing an elastomeric compound: the same reference numbers have the same meanings as disclosed in Fig. 1, Fig. 3 and in Fig. 4. It has to be intended that all the alternatives disclosed above with reference to Fig. 1, Fig. 3, as well as to Fig. 4, are valid also with reference to Fig. 5.

According to the particular embodiment of Fig. 5, the second elastomeric compound (108) is fed to a further internal mixer (501) (e.g. a Banbury^{®} mixer). The feeding to said further internal mixer (501) may be particularly useful when not all the components of the elastomeric compound are fed to the internal mixer (101). In this case, for example, the vulcanizing agents, and/or the activators, and/or the accelerators may be fed to said further internal mixer (501).

According to the particular embodiment of Fig. 5, the second elastomeric compound (108) is cooled, preferably to room temperature, by passing it through a cooling device (109) before being fed to said further internal mixer (501). Said cooling may be useful in order to increase the viscosity of said second elastomeric compound before feeding it to said further internal mixer (501) so allowing a better mixing of said second elastomeric composition into said further internal mixer (501).

Alternatively, the second elastomeric compound (108) may be directly fed, without being cooled, to said further internal mixer (501) (not represented in Fig. 5).

Alternatively, the second elastomeric compound (108) may be obtained in the form of a subdivided product as disclosed above and subsequently fed to said further internal mixer (501).

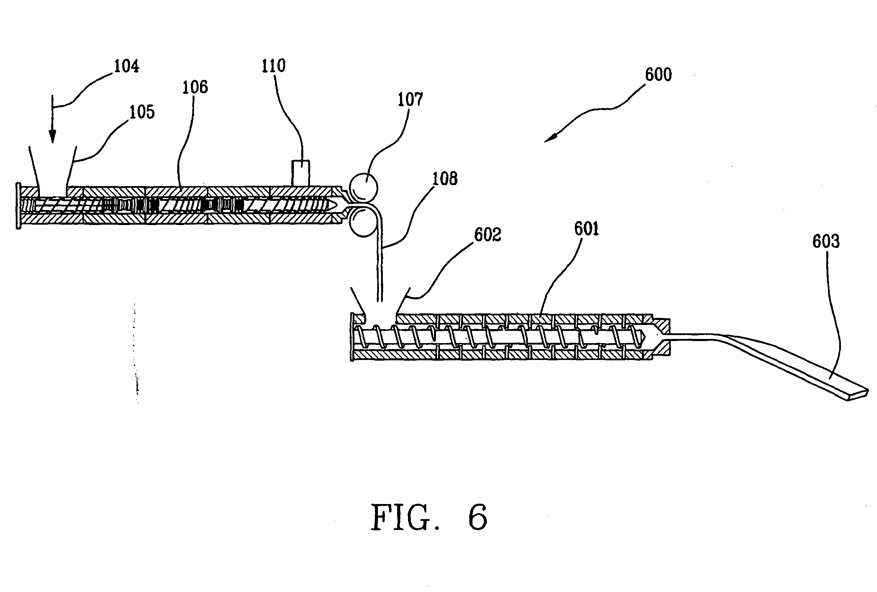

Fig. 6 shows a further embodiment of the plant (600) for producing an elastomeric compound: the same reference numbers have the same meanings as disclosed in Fig. 1. It has to be intended that all the alternatives disclosed above with reference to Fig. 1 are valid also with reference to Fig. 6.

According to the particular embodiment of Fig. 6, the second elastomeric compound (108) is directly fed to an extruder (601) for manufacturing a semi-finished product (e.g. a short barrel hot feed single screw extruder), through a feed hopper (602).

The second elastomeric compound is discharged from the extruder (601) in the form of a sheet (603) (e.g. in the form of a semi-finished product useful in tire manufacturing), by pumping it through an extrusion die (not represented in Fig. 6).

Alternatively, the second elastomeric compound (108) is discharged from the extruder (601) in the form of a sheet (603) (e.g. in the form of a semi-finished product useful in tire manufacturing), by pumping it through a roller die (not represented in Fig. 6).

Usually, the obtained sheet (603) (e.g. in the form of a semi-finished product useful in tire manufacturing) is subsequently subjected to a cooling treatment, usually by means of water and/or forced air. The sheet (603) thus treated is then usually arranged on benches or on bobbins waiting for further processing.

Alternatively, a continuous elongated strip-like element (not represented in Fig. 6) may be obtained from the extruder (601) which may be directly used, without being stored, in tire manufacturing, operating as disclosed above.

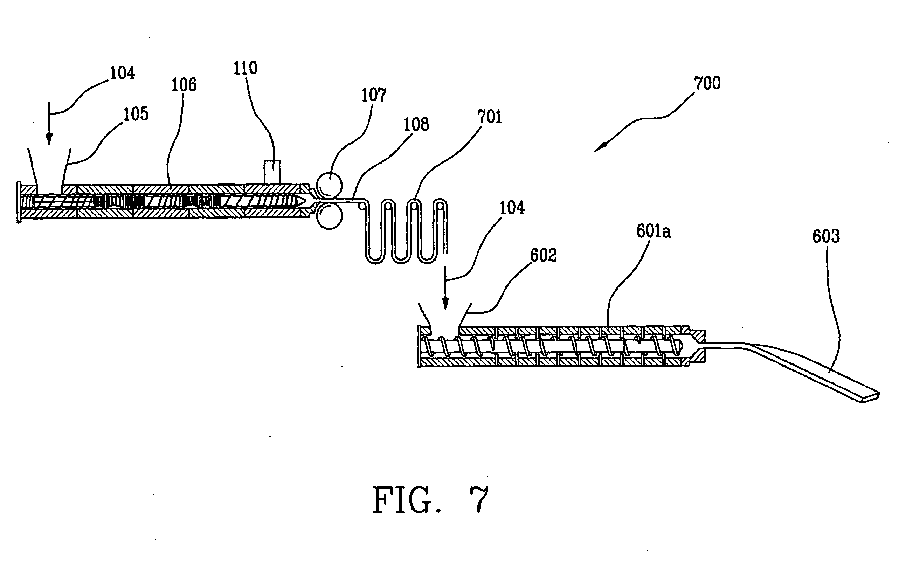

Fig. 7 shows a further embodiment of the plant (700) for producing an elastomeric compound: the same reference numbers have the same meanings as disclosed in Fig. 1 and in Fig. 6. It has to be intended that all the alternatives disclosed above with reference to Fig. 1, as well as with reference to Fig. 6, are valid also with reference to Fig. 7.

According to the particular embodiment of Fig. 7, the second elastomeric compound (108) is cooled, preferably to room temperature, by passing through a cooling device (109) before being fed to the extruder (601 a) (e.g. a long barrel cold feed single screw extruder), through a feed hopper (602).

The second elastomeric compound (108) is discharged from the extruder (601 a) in the form of a sheet (603) (e.g. in the form of a semi-finished product useful in tire manufacturing), by pumping it through an extrusion die (not represented in Fig. 7).

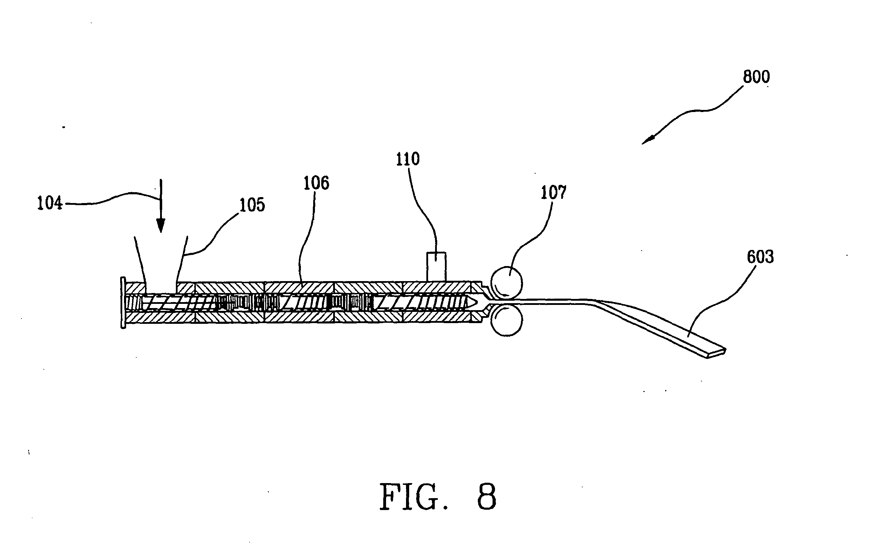

Fig. 8 shows a further embodiment of the plant (800) for producing an elastomeric compound: the same reference numbers have the same meanings as disclosed in Fig. 1 and Fig. 6. It has to be intended that all the alternatives disclosed above with reference to Fig. 1, as well as with reference to Fig. 6, are valid also with reference to Fig. 8.

According to the particular embodiment of Fig. 8, the second elastomeric compound is directly discharged from the mixing extruder (106), (e.g. in the form of a semi-finished product useful in tire manufacturing), by pumping it through a roller die (107).

Alternatively, the second elastomeric compound (108) is discharged from the mixing extruder (106) in the form of a sheet (603) (e.g. in the form of a semi-finished product useful in tire manufacturing), by pumping it through an extrusion die (not represented in Fig. 8).

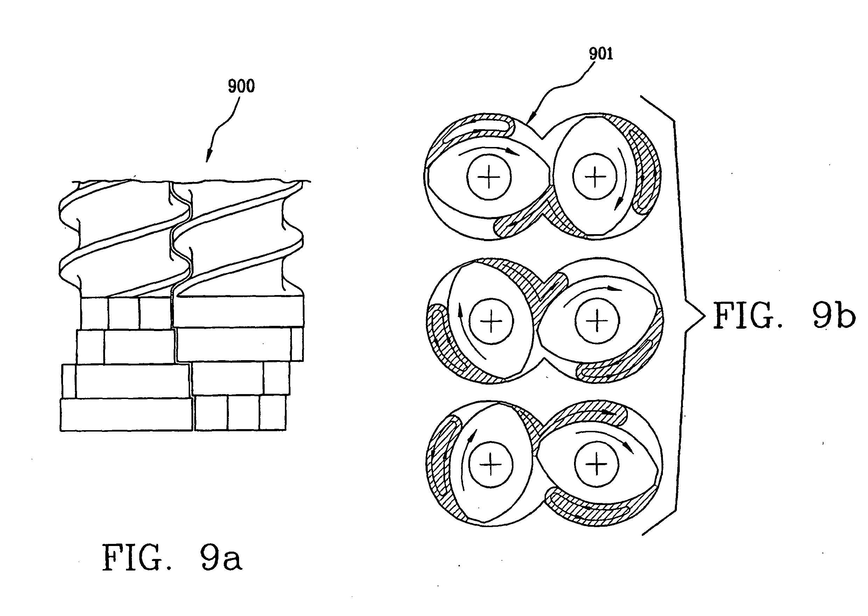

Fig. 9a is a lateral view of the two screws (900) of a self-wipening co-rotating intermeshing twin-screw extruder.

Fig. 9b are views in cross-section of the screws (901) of a self-wipening co-rotating intermeshing twin-screw extruder according to the present invention.

The present invention will be further illustrated below by means of a number of preparation examples, which are given for purely indicative purposes and without any limitation of this invention.

### EXAMPLES 1-2

### Preparation of the elastomeric compounds

The receipt of the prepared elastomeric compounds was given in Table 1 (the amounts of the various components are given in phr).

**TABLE 1**

| COMPONENT | phr |
|---|---|
| S-SBR | 90 |
| BR | 35 |
| Silica | 70 |
| X50S^{®} | 11.2 |
| Zinc oxide | 2.5 |
| Stearic acid | 2.0 |
| Wax | 1.0 |
| Aromatic oil | 8.0 |
| Antioxidant | 2.0 |
| Sulfur | 1.2 |
| DPG80 | 2.0 |
| CBS | 2.0 |

| | |
|---|---|
| S-SBR: solution-prepared styrene/1,3-butadiene copolymer having a styrene content of 25% by weight and a vinyl content of 50% by weight, with respect to the total copolymer weight; and containing 37.5 phr of aromatic oil (Buna^{®} VSL 5025-1 - Lanxess); BR: polybutadiene (Europrene Neocis^{®} BR40 - Polimeri Europa); Silica: Zeosil^{®} 1165 MP (Rhodia); X50S^{®}: silane coupling agent comprising 50% by weight of carbon black and 50% by weight of bis(3-triethoxysilylpropyl)tetrasulphide (Degussa-Hüls); Antioxidant: phenyl-p-phenylenediamine (6-PPD - Akzo Nobel); DPG80 (accelerator): diphenyl guanidine (Rhenogran^{®} DPG80 - Rhein Chemie); CBS (accelerator): N-cyclohexyl-2-benzothiazyl-sulphenamide (Vulkacit^{®} CZ/C - Lanxess). | |

The above reported elastomeric compounds were prepared as follows.

### Example 1 (comparative)

### 1^{st} step

All the components listed in Table 1, except sulfur and accelerators (DPG80 and CBS), were mixed together in a Banbury^{®} mixer (model F270), operating at the following working conditions:
- feeding: 225 kg;
- temperature: 30°C;
- mixing time: 240 seconds;
- fill factor: 68%;
- rotor speed: 50 rpm;
- discharge temperature: 150°C.

### 2^{nd} step

The elastomeric compound obtained in 1^{st} step, was cooled to room temperature (23°C) and was subsequently fed to the same Banbury^{®} mixer above disclosed and a further mixing was carried out operating at the following working conditions:
- feeding: 215 kg;
- temperature: 30°C;
- mixing time: 195 seconds;
- fill factor: 66%;
- rotor speed: 40 rpm;
- discharge temperature: 140°C.

### 3^{rd} step

The elastomeric compound obtained in 2^{nd} step, cooled to room temperature (23°C), as well as the sulfur and the accelerators (DPG80 and CBS), were fed to the same Banbury^{®} mixer above disclosed and a further mixing was carried out operating at the following working conditions:
- feeding: 225 kg;
- temperature: 30°C;
- mixing time: 195 seconds;
- fill factor: 66%;
- rotor speed: 40 rpm;
   discharge temperature: 110°C.

The elastomeric compound discharged from the Banbury^{®} mixer was subsequently cooled to room temperature (23°C).

The obtained elastomeric compound was tested to evaluate the following properties: Mooney viscosity (ML 1+4), mechanical properties (both static and dynamic), as well as filler dispersion: the obtained results were given in Table 2.

### Example 2 (invention)

The elastomeric compound was produced by using a plant according to Fig. 4.

To this aim, the elastomeric compound obtained according to Example 1, was directly fed (without cooling) to a conveying extruder (i.e. a single screw extruder), operating at the following working conditions:
- feeding rate: 4100 kg/h;
- screw speed: 20 rpm;
- temperature profile: 30°C;
- elastomeric compound temperature measured at extruder discharge: 110°C.

The elastomeric compound discharged from the conveying extruder was cooled to room temperature (23°C) and subsequently fed to a self-wipening co-rotating intermeshing twin screw extruder Maris TM92HT having a nominal screw diameter of 92 mm and a UD ratio of 32, operating at the following working conditions:
- feeding rate: 250 kg/h;
- twin screw speed: 70 rpm;
- torque: 63%;
- temperature profile: 40-50-60-50-40-30-20-20°C;
- elastomeric compound temperature measured at extruder discharge: 120°C.

The elastomeric compound discharged from the self-wipening co-rotating intermeshing twin screw extruder was subsequently cooled to room temperature (23°C).

The obtained elastomeric compound was tested to evaluate the following properties: Mooney viscosity (ML 1+4), mechanical properties (both static and dynamic), as well as filler dispersion: the obtained results were given in Table 2.

### Mooney viscosity

The Mooney viscosity ML(1+4) at 100°C was measured, according to Standard ISO 289-1:1994, on the non-crosslinked elastomeric compounds obtained as described above.

### Mechanical properties

The modulus (100% Modulus and 300% Modulus), the stress at break, as well as the elongation at break, were measured according to Standard ISO 37:2005 on samples of the abovementioned elastomeric compounds vulcanized at 170°C, for 10 min. The results obtained are given in Table 2.

The hardness in IRHD degrees (at 23°C) according to Standard ISO 48:1994 were measured on samples of the abovementioned elastomeric compounds vulcanized at 170°C, for 10 min. The results obtained are given in Table 2.
Table 2 also shows the dynamic mechanical properties, measured using an Instron dynamic device in the traction-compression mode according to the following methods. A test piece of the crosslinked elastomeric compounds (vulcanized at 170°C, for 10 min) having a cylindrical form (length = 25 mm; diameter = 12 mm), compression-preloaded up to a 7.5% longitudinal deformation with respect to the initial length, and kept at the prefixed temperature (23°C and 70°C) for the whole duration of the test, was submitted to a dynamic sinusoidal strain having an amplitude of ±3.5% with respect to the length under pre-load, with a 10 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

### Filler dispersion

The filler dispersion (i.e. silica dispersion) was measured according to Standard ISO 11345:2006.

To this aim a test piece of the crosslinked elastomeric compounds (vulcanized at 170°C, for 10 min) having the following dimension: 4 mm x 4 mm, was used to evaluate both the silica dispersion (X value) and the silica distribution (Y value) by using a DisperGrader Model 1000NT with 100x magnification, (TECH PRO Corp.). This model has several scales available for comparison. The scale that was selected for these test was the RCB scale. This scale is typically used for measurement of elastomeric compounds filled with reinforcing carbon black.

Ten reference pictures are used for determining the silica dispersion (X value). An algorithm has been derived using these reference pictures and is then applied to an unknown sample. The DisperGrader then analyzes an unknown sample and automatically assigns a dispersion value (X value) to the unknown sample. Higher dispersion values (X values) represent better dispersion. Visual comparison is seen on a computer monitor. The unknown specimen is shown on one half of the screen and the reference picture is displayed simultaneously adjacent to it. The numerical value of dispersion value (X value) is shown on the screen and output to a separate computer for further analysis.

The Y value is not based on visual comparison against photographic standards, but based on the actual size and number of large agglomerates. A high rating values means that there are no agglomerates present in the tested areas that are higher than 23 µm in average diameter.

**TABLE 2**

| EXAMPLE | 1 (*) | 2 |
|---|---|---|
| Mooney Viscosity (ML 1+4) | 77 | 76 |

| STATIC MECHANICAL PROPERTIES | | |
|---|---|---|
| 100% Modulus (CA1) (MPa) | 3.04 | 2.97 |
| 300% Modulus (CA3) (MPa) | 11.90 | 12.32 |
| CA3/CA1 | 3.91 | 4.15 |
| Stress at break (MPa) | 14.04 | 15.88 |
| Elongation at break (%) | 376 | 402 |
| IRHD hardness (23°C) | 77 | 77 |

| DYNAMIC MECHANICAL PROPERTIES | | |
|---|---|---|
| E' (23°C) | 9.62 | 10.46 |
| E' (70°C) | 7.62 | 8.11 |
| Tan delta (23°C) | 0.258 | 0.256 |
| Tan delta (70°C) | 0.119 | 0.120 |

| SILICA DISPERSION | | |
|---|---|---|
| X value | 3.8 | 4.9 |
| Y value | 7.7 | 9.1 |

| | | |
|---|---|---|
| (*): comparative. | | |

The data reported in the above Table 2, show that the crosslinked elastomeric compounds obtained according to the present invention (Example 2) have improved stress at break, the remaining properties, being not negatively affected, with respect to the crosslinked elastomeric compound obtained according to the prior art (Example 1).

Moreover, the data reported in the above Table 2, show that crosslinked elastomeric compounds obtained according to the present invention (Example 2) have an improved silica dispersion with respect to the crosslinked elastomeric compound obtained according to the prior art (Example 1).

## Claims

1. Process for manufacturing a tire comprising:
- manufacturing a green tire comprising a plurality of structural elements,
- subjecting the green tire to moulding and crosslinking to obtain a finished tire;
wherein at least one of said structural element comprises an elastomeric compound (108), produced by
- feeding all the components of said elastomeric compound to at least one batch mixing device (101) of a mixing apparatus (101 a); wherein said components comprise at least one elastomeric polymer (102) selected from diene elastomeric polymers and mono-olefin elastomeric polymers, or mixtures thereof, at least one reinforcing filler (103) and vulcanizing agents, wherein said at least one batch mixing device (101) has two counter-rotating rotors and the mixing in said at least one batch mixing device (101) is carried out at a rotor speed of about 20 rpm to about 60 rpm;
- mixing and dispersing, in said mixing apparatus (101a), said at least one reinforcing filler (103) into said at least one elastomeric polymer (102), so as to obtain said elastomeric compound (104), wherein the mixing is carried out in at least two different steps, the first step being a non-productive step wherein all the components except those able to promote the crosslinking are fed to said batch mixing device (101), the second step being a productive step wherein the elastomeric compound obtained from said first step as well as the components able to promote crosslinking are fed to said batch mixing device (101);
- discharging said elastomeric compound (104) from said mixing apparatus (101a);
- feeding said elastomeric compound (104) to at least one continuous mixing device (106);
- mixing said elastomeric compound into said at least one continuous mixing device (106);
- discharging said elastomeric compound (108) from said at least one continuous mixing device (106),
- wherein said process further comprises cooling said elastomeric compound (104) to a temperature from about 15°C to about 40°C before feeding it to said at least one continuous mixing device (106),
- wherein said at least one continuous mixing device (106) is a self-wipening co-rotating intermeshing twin-screw or multi-screw extruder or a planetary roller extruder, and
- wherein said mixing in said at least one continuous mixing device is carried out at a screw speed of about 40 rpm to about 400 rpm.

2. Process for manufacturing a tire according to claim 1, wherein said process for producing an elastomeric compound (104,108) is carried out continuously or discontinuously.

3. Process for manufacturing a tire according to claim 1 or 2, wherein said batch mixing device is selected from internal mixers, or open mixers.

4. Process for manufacturing a tire according to any one of the preceding claims, wherein the mixing in said at least one batch mixing device (101) is carried out using a fill factor of the mixing chamber not higher than about 80%.

5. Process for manufacturing a tire according to any one of the preceding claims, wherein the screws of said self-wipening co-rotating intermeshing twin-screw or multi-screw extruder are at least partially intermeshed.

6. Process for manufacturing a tire according to any one of the preceding claims, wherein the screws of said self-wipening co-rotating intermeshing twin-screw or multi-screw extruder are substantially fully intermeshed.

7. Process for manufacturing a tire according to any one of the preceding claims, wherein said mixing extruder (106) comprises:
- a housing, said housing including at least one feed opening and a discharge opening;
- wherein the screws are rotatably mounted in said housing.

8. Process for manufacturing a tire according to any one of the preceding claims, wherein said mixing extruder is a ring extruder.

9. Process for manufacturing a tire according to any one of the preceding claims, wherein said mixing apparatus includes at least one conveying extruder and the elastomeric compound (104, 108) is fed to said at least one conveying extruder before being fed to said at least one continuous mixing device (106).

10. Process for manufacturing a tire according to any one of the preceding claims, wherein said mixing apparatus includes at least one internal mixer (101) and at least one open mixer, said open mixer being placed downstream to said at least one internal mixer (101).

11. Process for manufacturing a tire according to any one of the preceding claims, wherein said at least one continuous mixing device (106) is placed upstream of a device for manufacturing a semi-finished product by using said elastomeric compound (104,108).

12. Process for manufacturing a tire according to any one of the preceding claims, wherein said at least one continuous mixing device (106) is equipped with a roller die (107).

13. Process for manufacturing a tire according to any one of the preceedings claims, wherein said at least one continuous mixing device (106) is equipped with an extrusion die.

## Patentansprüche

1. Verfahren zur Herstellung eines Reifens, umfassend:
- Herstellen eines Reifenrohlings, der eine Mehrzahl von Strukturelementen umfasst,
- Durchführen einer Formung und Quervernetzung mit dem Reifenrohling, um einen fertigen Reifen zu erhalten;
worin mindestens eines der Strukturelemente ein elastomeres Compoundmaterial (108) umfasst, das hergestellt wird durch
- Zuführen aller Komponenten der elastomeren Verbindung zu mindestens einer Chargen (Batch)-Mischvorrichtung (101) eines Mischapparats (101a), worin die Komponenten mindestens ein elastomeres Polymer (102) ausgewählt aus Dieneleastomerpolymeren und Monoolefinelastomerpolymeren oder Mischungen daraus, mindestens einen verstärkenden Füllstoff (103) und Vulkanisiermittel umfassen, worin die mindestens eine Chargen-Mischvorrichtung (101) zwei gegenläufig rotierende Rotoren aufweist und das Mischen in der mindestens einen Chargen-Mischvorrichtung (101) bei einer Rotorgeschwindigkeit von etwa 20 UPM bis etwa 60 UPM durchgeführt wird;
- Mischen und Dispergieren des mindestens einen verstärkenden Füllstoffs (103) in das mindestens eine elastomere Polymer (102) im Mischapparat (101a), um das elastomere Compoundmaterial (104) zu erhalten, worin das Mischen in mindestens zwei unterschiedlichen Schritten durchgeführt wird, der erste Schritt ein nicht-produktiver Schritt ist, worin alle Komponenten außer denen, die zum Fördern der Vernetzung in der Lage sind, der Chargen-Mischvorrichtung (101) zugeführt werden, der zweite Schritt ein produktiver Schritt ist, wobei das aus dem ersten Schritt erhaltene elastomere Compoundmaterial und die Komponenten, die zum Fördern der Vernetzung in der Lage sind, der Chargen-Mischvorrichtung (101) zugeführt werden;
- Entnehmen des elastomeren Compoundmaterials (104) aus dem Mischapparat (101a);
- Zuführen des elastomeren Compoundmaterials (104) zu mindestens einer kontinuierlichen Mischvorrichtung (106),
- Mischen des elastomeren Compoundmaterials in der mindestens einen kontinuierlichen Mischvorrichtung (106);
- Entnehmen des elastomeren Compoundmaterials (108) aus der mindestens einen kontinuierlichen Mischvorrichtung (106);
- worin das Verfahren weiterhin das Kühlen des elastomeren Compoundmaterials (104) auf eine Temperatur von etwa 15°C bis etwa 40°C vor dessen Zuführung zur mindestens einen kontinuierlichen Mischvorrichtung (106) umfasst,
- worin die mindestens eine kontinuierliche Mischvorrichtung (106) ein co-rotierender, dicht (self-wiping) ineinandergreifender Doppelschrauben- oder Multischraubenextruder oder ein Planetenwalzenextruder ist, und
- worin das Mischen in der mindestens einen kontinuierlichen Mischvorrichtung bei einer Schraubengeschwindigkeit von etwa 40 UPM bis etwa 400 UPM durchgeführt wird.

2. Verfahren zur Herstellung eines Reifens gemäß Anspruch 1, worin das Verfahren zum Herstellen eines elastomeren Compoundmaterials (104, 108) kontinuierlich oder diskontinuierlich durchgeführt wird.

3. Verfahren zur Herstellung eines Reifens gemäß Anspruch 1 oder 2, worin die Chargen-Mischvorrichtung aus internen Mischern oder offenen Mischern ausgewählt ist.

4. Verfahren zur Herstellung eines Reifens gemäß irgendeinem der vorhergehenden Ansprüche, worin das Mischen in der mindestens einen Chargen-Mischvorrichtung (101) unter Verwendung eines Füllfaktors der Mischkammer von nicht höher als etwa 80 % durchgeführt wird.

5. Verfahren zur Herstellung eines Reifens gemäß irgendeinem der vorhergehenden Ansprüche, worin die Schrauben des co-rotierenden, dicht ineinandergreifenden Doppelschrauben- oder Multischraubenextruders zumindest teilweise ineinandergreifen.

6. Verfahren zur Herstellung eines Reifens gemäß irgendeinem der vorhergehenden Ansprüche, worin die Schrauben des co-rotierenden, dicht ineinandergreifenden Doppelschrauben- oder Multischraubenextruders zumindest im wesentlichen vollständig ineinandergreifen.

7. Verfahren zur Herstellung eines Reifens gemäß irgendeinem der vorhergehenden Ansprüche, worin der Mischextruder (106) umfasst:
- ein Gehäuse, wobei das Gehäuse mindestens eine Zufuhröffnung und eine Auslassöffnung einschließt;
- worin die Schrauben rotierbar im Gehäuse montiert sind.

8. Verfahren zur Herstellung eines Reifens gemäß irgendeinem der vorhergehenden Ansprüche, worin der Mischextruder ein Ringextruder ist.

9. Verfahren zur Herstellung eines Reifens gemäß irgendeinem der vorhergehenden Ansprüche, worin der Mischapparat mindestens einen Förderextruder einschließt und das elastomere Compoundmaterial (104, 108) dem mindestens einen Förderextruder zugeführt wird, bevor sie der mindestens kontinuierlichen Mischvorrichtung (106) zugeführt wird.

10. Verfahren zur Herstellung eines Reifens gemäß irgendeinem der vorhergehenden Ansprüche, worin der Mischapparat mindestens einen internen Mischer (101) und mindestens einen offenen Mischer einschließt, worin der offene Mischer dem mindestens einen internen Mischer (101) nachgeschaltet platziert ist.

11. Verfahren zur Herstellung eines Reifens gemäß irgendeinem der vorhergehenden Ansprüche, worin die mindestens eine kontinuierliche Mischvorrichtung (106) einer Vorrichtung zum Herstellen eines Halbfertigprodukts unter Verwendung des elastomeren Compoundmaterials (104, 108) vorgeschaltet platziert ist.

12. Verfahren zur Herstellung eines Reifens gemäß irgendeinem der vorhergehenden Ansprüche, worin die mindestens eine kontinuierliche Mischvorrichtung (106) mit einer Walzendüse (107) ausgestattet ist.

13. Verfahren zur Herstellung eines Reifens gemäß irgendeinem der vorhergehenden Ansprüche, worin die mindestens kontinuierliche Mischvorrichtung (106) mit einer Extrusionsdüse ausgestattet ist.

## Revendications

1. Procédé de fabrication d'un pneu comprenant :
- fabriquer un pneu vert comprenant une pluralité d'éléments structurels,
- soumettre le pneu vert au moulage et à la réticulation afin d'obtenir un pneu fini ;
dans lequel au moins l'un desdits éléments structurels comprend un composé élastomère (108), produit par les étapes
- amener tous les composants dudit composé élastomère à au moins un dispositif de mélange par lots (101) d'un appareil de mélange (101a); dans lequel lesdits composants comprennent au moins un polymère élastomère (102) sélectionné parmi les polymères élastomères diènes et les polymères élastomères mono-oléfines, ou leurs mélanges, au moins une charge renforçante (103) et des agents de vulcanisation, dans lequel ledit au moins un dispositif de mélange par lots (101) présente deux rotors contrarotatifs et le mélange dans ledit au moins un dispositif de mélange par lots (101) est réalisé à un régime rotor d'environ 20 tours par minute à environ 60 tours par minute ;
- mélanger et disperser, dans ledit appareil de mélange (101a), ladite au moins une charge renforçante (103) dans ledit au moins un polymère élastomère (102), afin d'obtenir ledit composé élastomère (104), le mélange étant réalisé au moins en deux étapes distinctes, la première étape étant une étape non productive dans laquelle tous les composants, excepté ceux susceptibles d'activer la réticulation, sont amenés audit dispositif de mélange par lots (101), la deuxième étape étant une étape productive dans laquelle le composé élastomère obtenu à partir de ladite première étape et les composants susceptibles d'activer la réticulation sont amenés audit dispositif de mélange par lots (101) ;
- décharger ledit composé élastomère (104) dudit appareil de mélange (101a) ;
- amener ledit composé élastomère (104) à au moins un dispositif de mélange en continu (106) ;
- mélanger ledit composé élastomère dans ledit au moins un dispositif de mélange en continu (106) ;
- décharger ledit composé élastomère (108) dudit au moins un dispositif de mélange en continu (106),
- ledit procédé comprenant de plus un refroidissement dudit composé élastomère (104) à une température comprise entre environ 15°C et environ 40°C avant de l'amener audit au moins un dispositif de mélange en continu (106),
- ledit au moins un dispositif de mélange en continu (106) étant une extrudeuse auto-essuyante à double vis ou à vis multiples engrenantes en co-rotation ou une extrudeuse à vis planétaires, et
- ledit mélange dans ledit au moins un dispositif de mélange en continu étant réalisé à une vitesse de rotation de la vis comprise entre environ 40 tours par minute et environ 400 tours par minute.

2. Procédé de fabrication d'un pneu selon la revendication 1, dans lequel ledit procédé pour produire un composé élastomère (104, 108) est réalisé de manière continue ou discontinue.

3. Procédé de fabrication d'un pneu selon la revendication 1 ou 2, dans lequel ledit dispositif de mélange par lots est sélectionné parmi les mélangeurs internes, ou les mélangeurs ouverts.

4. Procédé de fabrication d'un pneu selon l'une quelconque des revendications précédentes, dans lequel le mélange dans ledit au moins un dispositif de mélange par lots (101) est réalisé en utilisant un facteur de remplissage de la chambre de mélange non supérieur à environ 80%.

5. Procédé de fabrication d'un pneu selon l'une quelconque des revendications précédentes, dans lequel les vis de ladite extrudeuse auto-essuyante à double vis ou à vis multiples engrenantes en co-rotation sont au moins partiellement engrenantes les unes avec les autres.

6. Procédé de fabrication d'un pneu selon l'une quelconque des revendications précédentes, dans lequel les vis de ladite extrudeuse auto-essuyante à double vis ou à vis multiples engrenantes en co-rotation sont sensiblement entièrement engrenantes les unes avec les autres.

7. Procédé de fabrication d'un pneu selon l'une quelconque des revendications précédentes, dans lequel ladite extrudeuse de mélange (106) comprend :
- une chambre, ladite chambre incluant au moins une ouverture d'alimentation et une ouverture d'évacuation ;
- dans lequel les vis sont montées pivotantes dans ladite chambre.

8. Procédé de fabrication d'un pneu selon l'une quelconque des revendications précédentes, dans lequel ladite extrudeuse de mélange est une extrudeuse en anneau.

9. Procédé de fabrication d'un pneu selon l'une quelconque des revendications précédentes, dans lequel ledit appareil de mélange inclut au moins une extrudeuse de transport et le composé élastomère (104, 108) est amené à ladite au moins une extrudeuse de transport avant d'être amené audit au moins un dispositif de mélange en continu (106).

10. Procédé de fabrication d'un pneu selon l'une quelconque des revendications précédentes, dans lequel ledit appareil de mélange inclut au moins un mélangeur interne (101) et au moins un mélangeur ouvert, ledit mélangeur ouvert étant placé en aval dudit au moins un mélangeur interne (101).

11. Procédé de fabrication d'un pneu selon l'une quelconque des revendications précédentes, dans lequel ledit au moins un dispositif de mélange en continu (106) est placé en amont d'un dispositif pour fabriquer un produit semi-fini à l'aide dudit composé élastomère (104, 108).

12. Procédé de fabrication d'un pneu selon l'une quelconque des revendications précédentes, dans lequel ledit au moins un dispositif de mélange en continu (106) est équipé d'une buse à plaque (107).

13. Procédé de fabrication d'un pneu selon l'une quelconque des revendications précédentes, dans lequel ledit au moins un dispositif de mélange en continu (106) est équipé d'une filière d'extrusion.
